# EUROPÄISCHE PATENTSCHRIFT

(11) **EP 2 959 812 B1**
(45) Veröffentlichungstag und Bekanntmachung des Hinweises auf die Patenterteilung: **01.03.2017**
(21) Anmeldenummer: 15001238.3
(22) Anmeldetag: 27.04.2015
(51) Int. Cl.: A47K 3/30

(54) **ANORDNUNG ZUM VERBINDEN ZWEIER PROFILSCHIENEN**
ASSEMBLY FOR THE CONNECTION OF TWO PROFILE RAILS
SYSTÈME DE LIAISON DE DEUX RAILS PROFILÉS

(30) Priorität: 24.06.2014 AT 4942014
(43) Veröffentlichungstag der Anmeldung: 30.12.2015
(73) Patentinhaber: TIF GmbH, 39042 Brixen (IT)
(72) Erfinder: Rabensteiner, Alois, 39040 Villanders (IT)
(74) Vertreter: Torggler & Hofinger Patentanwälte

(56) Entgegenhaltungen:
- EP-A2- 1 764 018
- DE-U1-202005 001 167

## Beschreibung

Die Erfindung betrifft eine Anordnung zum Verbinden zweier Profilschienen, insbesondere für eine Duschtrennwand, mit einem an einer Wand befestigbaren Wandprofil, einem am Wandprofil befestigbaren Zwischenprofil, einem Verbindungselement zum Verbinden des Wandprofils mit der Wand und dem Zwischenprofil und zumindest einem Wandbefestigungselement zum Befestigen des Wandprofils und zumindest einem Profilbefestigungselement zum Befestigen des Zwischenprofils über das Verbindungselement.

Weiters soll ein Verfahren zur Montage der erfindungsgemäßen Anordnung zum Verbinden zweier Profilschienen angegeben werden. Verbindungselemente zum Verbinden von Profilschienen sind bereits aus dem Stand der Technik bekannt und werden beispielsweise in der europäischen Patentschrift EP 0119376 gezeigt. Zueinander verstellbare Profile - Ausgleichsprofile - zum Überbrücken. von Toleranzen, werden bereits seit längerem im Bereich für Duschkabinen oder Fenster angewendet. Dabei werden zumindest zwei Profile miteinander beweglich verbunden, wobei ein Profil zum Beispiel an einer Wand befestigt wird und das zweite Profil mit einer Glasscheibe versehen ist. Um die genannte Anordnung ihrem Einbauort anpassen zu können, sind die Profile zueinander beweglich gelagert. So kann beispielsweise eine schräge Wand, auf der das Wandprofil montiert wird, über das Zwischenprofil zur Trennwand hin ausgeglichen werden. Aufgrund der kompakten Bauweise, bzw. der meist geschlossenen Struktur der Profile ist es jedoch schwierig, die Elemente, welche zur Verstellung der Profile zueinander bzw. des Profils zur Wand dienen, so in den Profilen zu integrieren, dass diese das ästhetische Gesamtbild beispielsweise einer Duschkabine nicht stören und trotzdem leicht zugänglich sind, um eine Verstellung durchführen zu können.

Das Dokument DE 20 2005 001 167 U1 offenbart eine Vorrichtung gemäß dem Oberbegriff des Anspruchs 1. Aufgabe der Erfindung ist es, die vorbeschriebenen Nachteile zu vermeiden und eine gegenüber dem Stand der Technik verbesserte Anordnung zum Verbinden zweier Profilschienen bzw. ein Verfahren zur Montage dieser Anordnung anzugeben.

Diese Aufgabe wird erfindungsgemäß dadurch gelöst, dass das Verbindungselement ein Führungslager aufweist, über welches das Profilbefestigungselement quer zur Längsachse der Profile verschiebbar gelagert ist.

Weiters sieht man zur Lösung dieser Aufgabe vor, dass die Montage der Anordnung zum Verbinden zweiter Profilschienen folgende Schritte umfasst:
- Einsetzen des Profilbefestigungselementes, vorzugsweise in Form einer Mutter, in das Führungslager des Verbindungselements,
- Einrasten des Verbindungselements in das Wandprofil,
- Ansetzen des Wandprofiles an der Wand und markieren von zumindest einem Befestigungspunkt an der Wand,
- Bohren der Befestigungspunkte an der Wand und Ansetzen des Wandprofiles durch zumindest ein Wandbefestigungselement, vorzugsweise bestehend aus Dübel und Schraube,
- Ausrichten des Wandprofiles anhand des zumindest einen als Langloch ausgestalteten Wandbefestigungsabschnittes,
- Festziehen des Wandbefestigungsselements und Arretieren des Wandprofiles,
- Aufsetzen des Zwischenprofiles auf das Wandprofil,
- Einsetzen des zumindest einen Profilbefestigungselements, vorzugsweise in Form einer Schraube,
- Ausrichten des Zwischenprofils relativ zum Wandprofil,
- Festziehen des zumindest einen Profilbefestigungselements und Arretieren des Zwischenprofiles in seiner Position zum Wandprofil,
- Einsetzen der Blende zum Abdecken des zumindest einen Profilbefestigungselements.

Weitere vorteilhafte Ausführungsformen sind in den abhängigen Unteransprüchen definiert.

Weitere Einzelheiten und Vorteile der vorliegenden Erfindung werden anhand der Figurenbeschreibung unter Bezugnahme auf die in den Zeichnungen dargestellten Ausführungsbeispielen im Folgenden näher erläutert.

Darin zeigen
- Fig. 1a, 1b: Anordnung aus Profilen in unterschiedlichen Stellungen,
- Fig. 2a, 2b: Verbindungselement im Zwischenprofil,
- Fig. 3a, 3b: Verbindungselement mit Wandbefestigungselement und Profilbefestigungselement,
- Fig. 4: Wandprofil mit Verbindungselement,
- Fig. 5: Duschtrennwand mit Profilen.

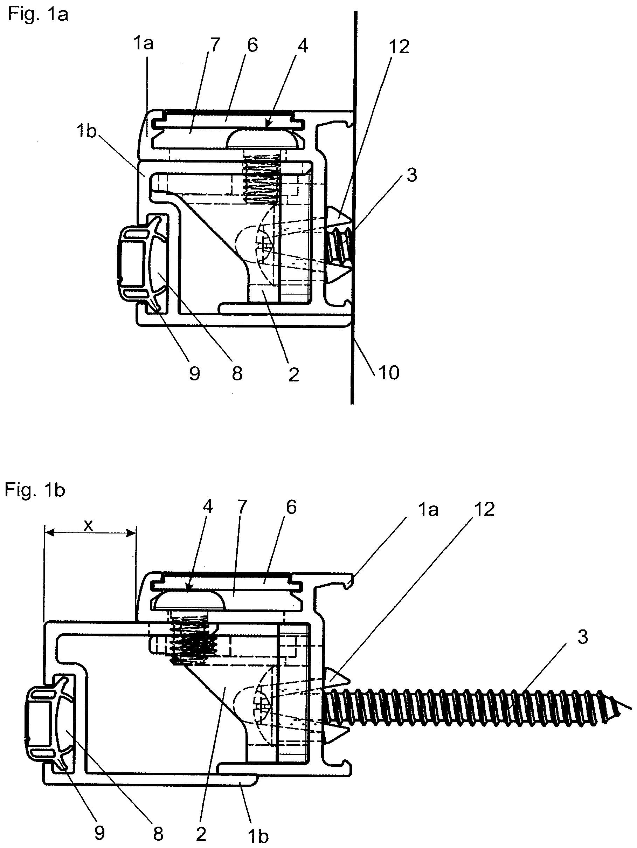

Die Figur 1 a zeigt ein durch ein Wandbefestigungselement 3 an einer Wand 10 montiertes Wandprofil 1 a. Das Zwischenprofil 1 b wird in das Wandprofil 1 a eingeschoben. Das Verbindungselement 2 wird durch das Wandbefestigungselement 3 im Inneren des Wandprofils 1 a gegen das Wandprofil 1 a gedrückt und befestigt somit das Wandprofil 1 a an der Wand 10. Das Profilbefestigungselement 4 greift in das Verbindungselement 2 ein. Weiters verbindet das Profilbefestigungselement 4 das Zwischenprofil 1 b mit dem Wandprofil 1 a. Das Profilbefestigungselement 4, vorzugsweise als Schraube ausgeführt, die beim Festziehen das Verbindungselement 2 gegen die Innenseite des Zwischenprofils 1 b drückt und das Zwischenprofil 1 b somit gegen das Wandprofil 1a presst, kann beispielsweise über eine Mutter mit dem Verbindungselement 2 verbunden sein. Das Profilbefestigungselement 4 wird durch eine Blende 6, die in einen dafür vorgesehenen Aufnahmebereich 7 platziert wird, verdeckt. Die Blende 6 kann beispielsweise aus Metall oder auch aus Kunststoff gefertigt sein und sollte neben dem abdeckenden Effekt auch zum ästhetischen Erscheinungsbild der Duschtrennwand 20 (in Figur 1 a nicht dargestellt) beitragen.

In der Dichtungsnut 8 ist eine Dichtung 9 vorgesehen, welche über einen darin befindlichen Magneten mit einer Türdichtung (in der Figur nicht dargestellt) Kontakt aufnimmt. Zusätzlich kann eine in der Figur 1 a nicht dargestellte Abtrennung- vorzugsweise in Form einer Glasscheibe - oder einer Abtrennung aus einem anderen Material, wie beispielsweise Holz, Holzimitat, Stein, Kunststoff, etc. im Bereich der Dichtungsnut 8 am Zwischenprofil 1 b befestigt werden. Dies kann mit oder ohne eine Dichtung 9 erfolgen. Je nach Geometrie der Dichtungsnut 8 wird die Abtrennung entweder mit oder ohne eine Dichtung 9 eingesetzt. Anstelle einer Abtrennung oder einer Dichtung 9 kann am Zwischenprofil 1 b über die Dichtungsnut 8 auch ein weiteres Profil befestigt werden. Dabei erreicht man den Vorteil, dass alle am Zwischenprofil 1 b angeordneten Komponenten relativ zum Wandprofil 1 a und zur Wand 10 verstellbar gelagert sind.

Die Figur 1b zeigt das Zwischenprofil 1 b, welches mit einem Verstellweg X zum Wandprofil 1 a verstellt wurde. Diese Verstellung erfolgt durch Lösen oder Lockern des Befestigungselementes 4, nachdem die Blende 6 aus dem Wandprofil 1 a genommen wurde. Wird das Profilbefestigungselement 4 gelockert oder gelöst, kann das Zwischenprofil 1 b in der Horizontalachse zum Wandprofil 1 a oder vom Wandprofil 1 a weg bewegt werden. Eine Verstellung des Zwischenprofils 1 b in Relation zum Wandprofil 1 a kann in jeder beliebigen Stellung zwischen der in Figur 1 a gezeigten Position und der in Figur 1 b gezeigten Position gewählt werden.

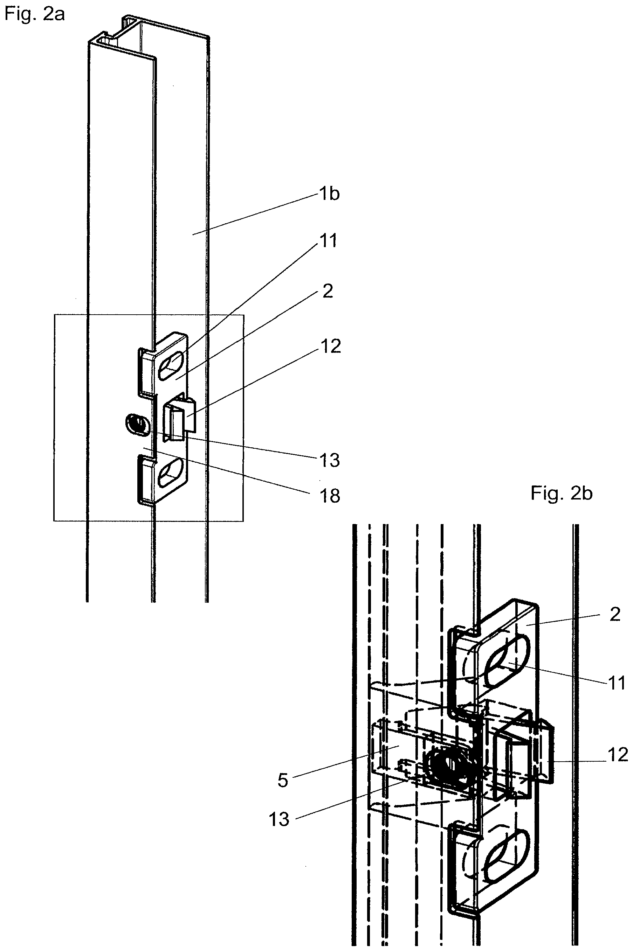

Die Figur 2a zeigt das Verbindungselement 2 im Zwischenprofil 1 b. Die Figur 2b zeigt die Anordnung in etwas vergrößerten und detaillierteren Abbildung, da hier das Zwischenprofil 1 b strichliert und transparent dargestellt wird und somit das Verbindungselement 2, welches sich im Zwischenelement 1 b befindet, sichtbar gemacht wird. Das Zwischenprofil 1 b weist zumindest einen Profilbefestigungsabschnitt 13 auf. Der Profilbefestigungsabschnitt 13, vorzugsweise als Langloch ausgeführt, dient als Aufnahme für das Profilbefestigungselement 4 (in Figur 2a, 2b nicht ersichtlich). Die Rastvorrichtung 12 dient zur Vormontage am Wandprofil 1 a. Über diese Rastvorrichtung 12 kann das Verbindungselement 2 mit einer dafür vorgesehenen Öffnung im Wandprofil 1 a verbunden werden. Somit bleibt das Verbindungselement 2 am Wandprofil 1 a, auch wenn dieses nicht mit dem Wandbefestigungselement 3 versehen wird. Ein versehentliches Herausfallen des Verbindungselementes 2 im Zuge der Montage des Wandprofils 1 a wird somit verhindert. Das Verbindungselement 2 kann mit der Rastvorrichtung 12 über mehrere dafür vorgesehene Öffnungen im Wandprofil 1 a eingesetzt werden, um die Montage des Wandprofils flexibler gestalten zu können. Das Verbindungselement 2 weist zumindest einen als Langloch ausgestalteten Wandbefestigungsabschnitt 11 auf, welcher in weiterer Folge das Wandbefestigungselement 3 aufnimmt. Über die Ausführung als Langloch kann das Wandbefestigungselement 3 beweglich im Wandbefestigungsabschnitt 11 gelagert werden. Eine Einstellung in Horizontalachse wird somit über den als Langloch ausgestalteten Wandbefestigungsabschnitt 11 realisiert, insofern das Wandbefestigungselement 3 noch gelockert ist. Nach Erreichen der gewünschten Einstellposition wird das Wandbefestigungselement 3 vollständig angezogen, das Wandprofil 1 a wird gegen die Wand 10 gedrückt und somit befestigt. Am Zwischenprofil 1 b ist ein Steg 18 ausgeführt, in welchen Bereiche des Verbindungselementes 2 eingreifen. Je nach Ausführung des Steges 18 und Ausführung des Profilbefestigungsabschnitts 13 kann das Verbindungselement 2 im Zwischenprofil 1 b in Richtung der Längsachse oder auch quer zur Längsachse des Zwischenprofils 1 b verschoben werden.

Die Figur 2b zeigt das Führungslager 5 im Verbindungselement 2. Der Profilbefestigungsabschnitt 13 deckt sich mit der Position des Führungslagers 5. Je nach Größe und Ausgestaltung des Profilbefestigungsabschnittes 13 ist nicht nur eine Verstellung des Zwischenprofils 1 b relativ zum Wandprofil 1 a in einer Horizontalachse, sondern auch in einer Vertikalachse möglich. Wird der Profilbefestigungsabschnitt 13 beispielsweise als sich in Längsrichtung des Zwischenprofils 1 b erstreckendes Langloch ausgebildet, kann sich das darin befindliche Profilbefestigungselement 4 in diesem Langloch bewegen. Somit ist nicht nur eine Verstellung in Horizontalachse entlang des Führungslagers 5, sondern auch eine Verstellung in der Vertikalachse entlang des Profilbefestigungsabschnittes 13 möglich.

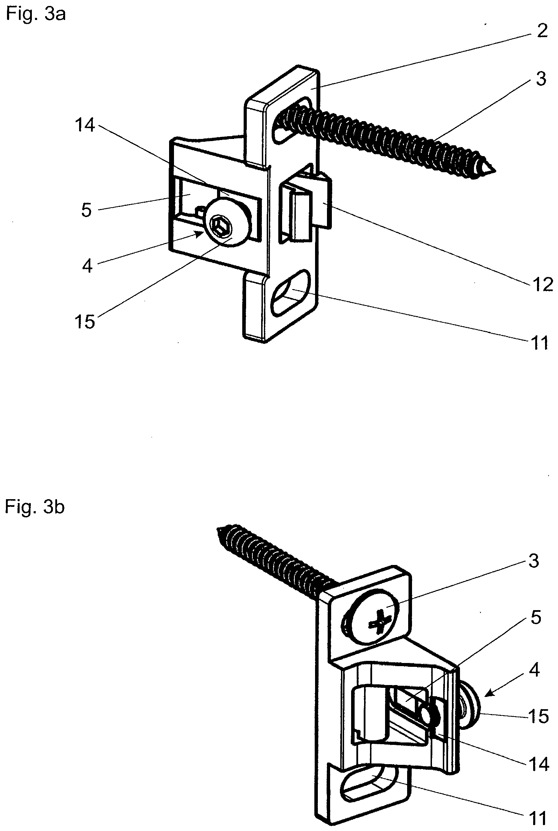

Die Figur 3a zeigt das Verbindungselement 2 mit dem zumindest einen Wandbefestigungsabschnitt 11 und einem beispielsweise als Schraube ausgeführten Wandbefestigungselement 3, welches in der Horizontalachse verschiebbar im Wandbefestigungsabschnitt 11 gelagert ist. Das Profilbefestigungselement 4 befindet sich verschiebbar im Führungslager 5. Beispielsweise kann dies über eine Mutter 14 erfolgen, die sich zumindest teilweise formschlüssig im Führungslager 5 befindet.

Die Figur 3b zeigt das Verbindungselement 2 aus einem anderen Blickwinkel. Hier ist erkennbar, dass die Mutter 14 durch den Aufbau des Führungslagers 5 in einer Ebene verschiebbar gelagert ist, jedoch nicht nach hinten aus dem Verbindungselement 2 herausfallen kann, wenn das Profilbefestigungselement 4 beispielsweise vollständig gelöst wird.

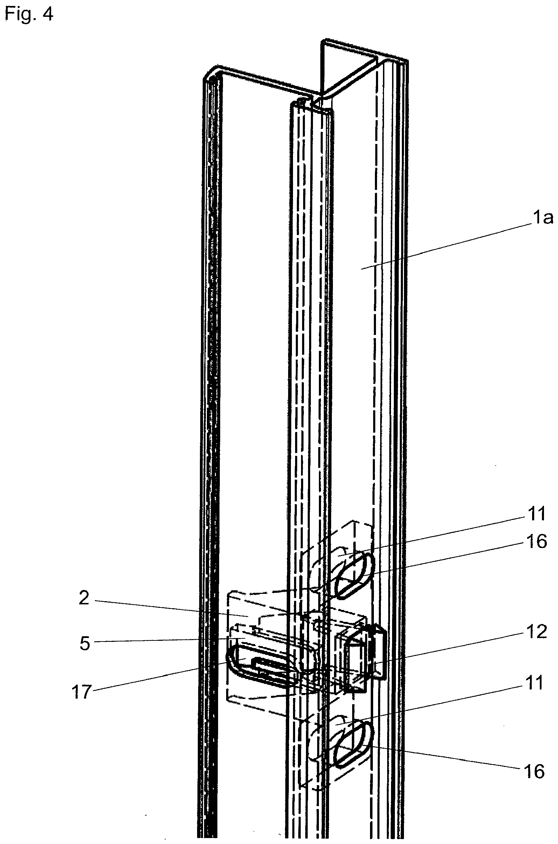

Die Figur 4 zeigt ein strichliert dargestelltes Wandprofil 1 a, in welchem sich das Verbindungselement 2 befindet. Durch die Rastvorrichtung 12 wird das Verbindungselement 2 in einer beliebigen dafür vorgesehenen Öffnung am Wandprofil 1 a vormontiert. Die erste Ausnehmung 16 im Wandprofil deckt sich mit dem Wandbefestigungsabschnitt 11, um in weiterer Folge eine Verstellung entlang des Langloches gewährleisten zu können. Weiters ist eine zweite Ausnehmung 17 im Wandprofil 1 a vorgesehen, welche sich mit dem Führungslager 5 des Verbindungselementes 2 deckt. Entlang dieser zweiten Ausnehmung 17 kann das Profilbefestigungselement 4 in der Längsachse der Ausnehmung 17 verfahren.

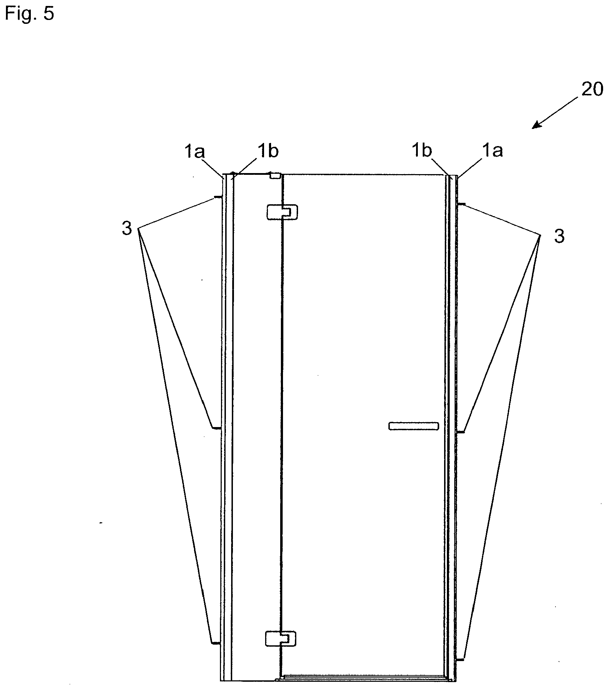

Die Figur 5 zeigt eine Duschtrennwand 20 mit Wandbefestigungsprofilen 1 a bzw. Zwischenprofilen 1 b. Die gesamte Anordnung wird in weiterer Folge mit den Wandbefestigungselementen 3 an einer in der Figur 5 nicht sichtbaren Wand befestigt. Würde die Wand beispielsweise aus dem Lot sein, könnte über die in den vorigen Figuren erklärten Maßnahmen und Verstellmöglichkeiten die korrekte Montage der Duschtrennwand 20 erfolgen. Weiterhin kann der Ausgleich von Unebenheiten über vertikale Verstellmöglichkeiten erfolgen.

## Patentansprüche

1. Anordnung zum Verbinden zweier Profilschienen (1 a, 1 b), für eine Duschtrennwand (20), mit
- einem an einer Wand (10) befestigbaren Wandprofil (1 a),
- einem am Wandprofil (1 a) befestigbaren Zwischenprofil (1 b),
- einem Verbindungselement (2) zum Verbinden des Wandprofils (1 a) mit der Wand (10),
- zumindest einem Wandbefestigungselement (3) zum Befestigen des Wandprofils (1 a) und zumindest einem Profilbefestigungselement (4) zum Befestigen des Zwischenprofils (1 b) über das Verbindungselement (2),
wobei das Verbindungselement (2) ein Führungslager (5) aufweist, über welches das Profilbefestigungselement (4) quer zur Längsachse der Profile (1 a, 1 b) verschiebbar gelagert ist, **dadurch gekennzeichnet, dass** das Verbindungselement (2) zum Verbinden des Wanprofils (1a) mit der Wand und dem Zwischenprofil (1b) dient.

2. Anordnung nach dem Anspruch 1, **dadurch gekennzeichnet, dass** das Verbindungselement (2) zumindest einen als Langloch ausgestalteten Wandbefestigungsabschnitt (11) aufweist.

3. Anordnung nach dem Anspruch 1 oder 2, **dadurch gekennzeichnet, dass** das Wandprofil (1 a) zumindest eine als Langloch ausgestaltete erste Ausnehmung (16) aufweist, welche sich im Montagezustand mit dem zumindest einen Wandbefestigungsabschnitt (11) des Verbindungselementes (2) deckt.

4. Anordnung nach einem der Ansprüche 1 bis 3, **dadurch gekennzeichnet, dass** das Wandprofil (1 a) über den zumindest einen Wandbefestigungsabschnitt (11) des Verbindungselementes (2) und der Ausnehmung (16) des Wandprofiles (1) relativ zur Wand (10) verschiebbar ist.

5. Anordnung nach einem der Ansprüche 1 bis 4, **dadurch gekennzeichnet, dass** das Verbindungselement (2) zumindest eine Rastvorrichtung (12) zur Vormontage am Wandprofil (1 a) aufweist.

6. Anordnung nach einem der Ansprüche 1 bis 5, **dadurch gekennzeichnet, dass** das Zwischenprofil (1 b) über zumindest einen Profilbefestigungsabschnitt (13) verfügt.

7. Anordnung nach einem der Ansprüche 1 bis 6, **dadurch gekennzeichnet, dass** das Wandprofil (1 a) im Bereich des Führungslagers (5) des vormontierten Verbindungselementes (2) eine sich quer zur Längsachse des Wandprofiles (1 a) erstreckende zweite Ausnehmung (17) aufweist, entlang welcher das Profilbefestigungselement (4) verschiebbar ist.

8. Anordnung nach einem der Ansprüche 1 bis 7, **dadurch gekennzeichnet, dass** das Zwischenprofil (1b) in das Wandprofil (1 a) eingreift und das Verbindungselement (2) durch die Profile (1 a, 1 b) ummantelt wird.

9. Anordnung nach einem der Ansprüche 1 bis 8, **dadurch gekennzeichnet, dass** sich entlang der Längsachse des Wandprofiles (1 a) ein Aufnahmebereich (7) zur Aufnahme einer Blende (6) erstreckt.

10. Anordnung nach Anspruch 9, **dadurch gekennzeichnet, dass** die Blende (6) im befestigten Zustand das zumindest eine montierte Profilbefestigungselement (4) verdeckt.

11. Anordnung nach einem der Ansprüche 1 bis 10, **dadurch gekennzeichnet, dass** das Profilbefestigungselement (4) eine Schraube und eine Mutter (14), vorzugsweise Vierkantmutter, umfasst.

12. Duschtrennwand (20) mit einer Anordnung nach einem der Ansprüche 1 bis 11.

13. Verfahren zur Montage einer Anordnung zum Verbinden zweier Profilschienen, insbesondere nach einem der Ansprüche 1 bis 11, umfassend folgende Schritte:
- 1, Einsetzen des Profilbefestigungselementes (4), vorzugsweise in Form einer Mutter (14), in das Führungslager (5) des Verbindungselements (2),
- 2, Einrasten des Verbindungselements (2) in das Wandprofil (1 a),
- 3, Ansetzen des Wandprofiles (1 a) an der Wand (10) und markieren von zumindest einem Befestigungspunkt an der Wand (10),
- 4, Bohren der Befestigungspunkte an der Wand (10) und Ansetzen des Wandprofiles (1 a) durch zumindest ein Wandbefestigungselement (3), vorzugsweise bestehend aus Dübel und Schraube,
- 5, Ausrichten des Wandprofiles (1 a) anhand des zumindest einen als Langloch ausgestalteten Wandbefestigungsabschnittes (11),
- 6, Festziehen des Wandbefestigungselements (3) und Arretieren des Wandprofiles (1 a),
- 7, Aufsetzen des Zwischenprofiles (1 b) auf das Wandprofil (1 a),
- 8, Einsetzen des zumindest einen Profilbefestigungselements (4), vorzugsweise in Form einer Schraube,
- 9, Ausrichten des Zwischenprofils (1 b) relativ zum Wandprofil (1 a),
- 10, Festziehen des zumindest einen Profilbefestigungselements (4) und Arretieren des Zwischenprofiles (1b) in seiner Position zum Wandprofil (1 a),
- 11, Einsetzen der Blende (6) zum Abdecken des zumindest einen Profilbefestigungselements (4).

## Claims

1. An arrangement for connecting two profile bars (1 a, 1 b) for a shower partition (20), comprising
- a wall profile member (1a) which can be fixed to a wall (10),
- an intermediate profile member (1 b) which can be fixed to the wall profile member (1 a),
- a connecting element (2) for connecting the wall profile member (1 a) to the wall (10),
- at least one wall fixing element (3) for fixing the wall profile member (1a) and at least one profile member fixing element (4) for fixing the intermediate profile member (1 b) by way of the connecting element (2),
wherein the connecting element (2) has a guide mounting (5), by way of which the profile member fixing element (4) is mounted displaceably transversely relative to the longitudinal axis of the profile members (1 a, 1 b),
**characterised in that** the connecting element (2) serves for connecting the wall profile member (1a) to the wall and the intermediate profile member (1 b).

2. An arrangement according to claim 1 **characterised in that** the connecting element (2) has at least one wall fixing portion (11) in the form of a slot.

3. An arrangement according to claim 1 or claim 2 **characterised in that** the wall profile member (1 a) has at least one opening (16) which is in the form of a slot and which in the assembled condition is aligned with the at least one wall fixing portion (11) of the connecting element (2).

4. An arrangement according to one of claims 1 to 3 **characterised in that** the wall profile member (1a) is displaceable relative to the wall (10) by way of the at least one wall fixing portion (11) of the connecting element (2) and the opening (16) in the wall profile member (1).

5. An arrangement according to one of claims 1 to 4 **characterised in that** the connecting element (2) has at least one latching device (12) for pre-fitting to the wall profile member (1 a).

6. An arrangement according to one of claims 1 to 5 **characterised in that** the intermediate profile member (1 b) has at least one profile member fixing portion (13).

7. An arrangement according to one of claims 1 to 6 **characterised in that** in the region of the guide mounting (5) of the pre-fitted connecting element (2) the wall profile member (1a) has a second opening (17) which extends transversely relative to the longitudinal axis of the wall profile member (1a) and along which the profile member fixing element (4) is displaceable.

8. An arrangement according to one of claims 1 to 7 **characterised in that** the intermediate profile member (1 b) engages into the wall profile member (1 a) and the connecting element (2) is enclosed by the profile members (1 a, 1 b).

9. An arrangement according to one of claims 1 to 8 **characterised in that** a receiving region (7) for receiving a cover (6) extends along the longitudinal axis of the wall profile member (1 a).

10. An arrangement according to claim 9 **characterised in that** in the fixed condition the cover (6) covers the at least one fitted profile member fixing element (4).

11. An arrangement according to one of claims 1 to 10 **characterised in that** the profile member fixing element (4) includes a screw and a nut (14), preferably a square nut.

12. A shower partition (20) comprising an arrangement according to one of claims 1 to 11.

13. A method of fitting an arrangement for connecting two profile bars, in particular according to one of claims 1 to 11, including the following steps:
- 1. inserting the profile member fixing element (4), preferably in the form of a nut (14), into the guide mounting (5) of the connecting element (2),
- 2. latching the connecting element (2) into the wall profile member (1a),
- 3. fitting the wall profile member (1 a) to the wall (10) and marking at least one fixing point on the wall (10),
- 4. drilling the fixing points on the wall (10) and fitting the wall profile member (1a) by at least one wall fixing element (3), preferably comprising a dowel and a screw,
- 5. aligning the wall profile member (1 a) by means of at least one wall fixing portion (11) which is in the form of a slot,
- 6. tightening the wall fixing element (3) and arresting the wall profile member (1 a),
- 7. fitting the intermediate profile member (1 b) to the wall profile member (1 a),
- 8. inserting the at least one profile member fixing element (4), preferably in the form of a screw,
- 9. aligning the intermediate profile member (1 b) relative to the wall profile member (1 a),
- 10. tightening the at least one profile member fixing element (4) and arresting the intermediate profile member (1 b) in its position relative to the wall profile member (1 a), and
- 11. inserting the cover (6) for covering the at least one profile member fixing element (4).

## Revendications

1. Système pour la connexion de deux rails profilés (1 a, 1 b) pour un volet pare-douche (20), avec
- un profilé de mur (1 a) pouvant être fixé contre un mur (10),
- un profilé intercalaire (1b) pouvant être fixé contre le profilé de mur (1 a),
- un élément de connexion (2) pour le montage du profilé de mur (1 a) contre le mur (10),
- au moins un élément de fixation au mur (3) pour la fixation du profilé de mur (1 a) et au moins un élément de fixation de profilé (4) pour la fixation du profilé intercalaire (1 b) au moyen de l'élément de connexion (2),
dans lequel
l'élément de connexion (2) comprend un palier de guidage (5) au moyen duquel l'élément de fixation de profilé (4) est monté de manière coulissante transversalement à l'axe longitudinal des profilés (1 a, 1 b),
**caractérisé en ce que** l'élément de connexion (2) sert au montage du profilé de mur (1 a) contre le mur et le profilé intercalaire (1 b).

2. Système selon la revendication 1, **caractérisé en ce que** l'élément de connexion (2) comprend au moins une section de fixation au mur (11) réalisée sous forme de trou oblong.

3. Système selon la revendication 1 ou 2, **caractérisé en ce que** le profilé de mur (1a) présente au moins un premier évidement (16) réalisé sous forme de trou oblong et qui en état de montage coïncide avec ladite au moins une section de fixation au mur (11) de l'élément de connexion (2).

4. Système selon l'une des revendications 1 à 3, **caractérisé en ce que** le profilé de mur (1 a) est coulissant par rapport au mur (10) au moyen de ladite au moins une section de fixation au mur (11) de l'élément de connexion (2) et de l'évidement (16) du profilé de mur (1).

5. Système selon l'une des revendications 1 à 4, **caractérisé en ce que** l'élément de connexion (2) comprend au moins un dispositif d'enclenchement (12) destiné au pré-montage contre le profilé de mur (1 a).

6. Système selon l'une des revendications 1 à 5, **caractérisé en ce que** le profilé intercalaire (1b) dispose d'au moins une section de fixation au profilé (13).

7. Système selon l'une des revendications 1 à 6, **caractérisé en ce que** le profilé de mur (1 a) présente un deuxième évidement (17) s'étendant transversalement à l'axe longitudinal du profilé de mur (1a) au niveau du palier de guidage (5) de l'élément de connexion (2) pré-monté, le long duquel l'élément de fixation de profilé (4) est coulissant.

8. Système selon l'une des revendications 1 à 7, **caractérisé en ce que** le profilé intercalaire (1 b) s'engage dans le profilé de mur (1 a) et l'élément de connexion (2) est enveloppé par les profilés (1 a, 1 b).

9. Système selon l'une des revendications 1 à 8, **caractérisé en ce qu'**une zone de réception (7) pour la mise en place d'un cache (6) s'étend le long de l'axe longitudinal du profilé de mur (1 a).

10. Système selon la revendication 9, **caractérisé en ce qu'**en état de fixation, le cache (6) couvre ledit au moins un élément de fixation de profilé (4) monté.

11. Système selon l'une des revendications 1 à 10, **caractérisé en ce que** l'élément de fixation de profilé (4) comprend une vis et un écrou (14), préférentiellement un écrou carré.

12. Volet pare-douche (20) avec un système selon l'une des revendications 1 à 11.

13. Procédé de montage d'un système pour la connexion de deux rails profilés, en particulier selon l'une des revendications 1 à 11, comprenant les étapes suivantes :
- 1, mise en place de l'élément de fixation de profilé (4), préférentiellement sous la forme d'un écrou (14), dans le palier de guidage (5) de l'élément de connexion (2),
- 2, enclenchement de l'élément de connexion (2) dans le profilé de mur (1 a),
- 3, pose du profilé de mur (1 a) contre le mur (10) et marquage d'au moins un point de fixation sur le mur (10),
- 4, perçage des points de fixation sur le mur (10) et pose du profilé de mur (1 a) par au moins un élément de fixation au mur (3), composé préférentiellement d'une cheville et d'une vis,
- 5, alignement du profilé de mur (1a) sur la base de l'au moins une section de fixation au mur (11) configurée comme trou oblong,
- 6, serrage de l'élément de fixation au mur (3) et blocage du profilé de mur (1 a),
- 7, pose du profilé intercalaire (1 b) sur le profilé de mur (1 a),
- 8, mise en place dudit au moins un élément de fixation de profilé (4), préférentiellement sous la forme d'une vis,
- 9, alignement du profilé intercalaire (1b) par rapport au profilé de mur (1 a),
- 10, serrage dudit au moins un élément de fixation de profilé (4) et blocage du profilé intercalaire (1b) dans sa position par rapport au profilé de mur (1a),
- 11, mise en place du cache (6) pour la couverture dudit au moins un élément de fixation de profilé (4).
